# EUROPEAN PATENT APPLICATION

(11) **EP 4 751 862 A1**
(43) Date of publication of application: **03.06.2026**
(21) Application number: 25225424.8
(22) Date of filing: 19.12.2025
(51) Int. Cl.: B25J 11/00, B64U 70/00, B64U 70/30

(54) **A SYSTEM FOR AUTOMATED CAPTURING AND LAUNCHING AN UNMANNED AERIAL VEHICLE**

(30) Priority: 01.10.2025 UA 202504792
(71) Applicant: Stepura, Oleksandr, 08141 Kyivska oblast Sviatopetrivske (UA)
(72) Inventor: Stepura, Oleksandr, 08141 Kyivska oblast Sviatopetrivske (UA)
(74) Representative: AOMB Polska Sp. z.o.o.

(57) **Abstract**

The claimed invention relates to an automated system for capturing and launching an unmanned aerial vehicle (UAV) (9) with a fixed wing. The system comprises a base (1) with a secured manipulator (2), an end of the manipulator is equipped with a means for gripping and launching (8) the UAV (9). There is a control unit (10) that communicates with the UAV (9) for exchanging data, determining coordinates of a meeting point, synchronizing actions, controlling a position and launching the UAV (9). The manipulator (2) has at least three sections (4, 5, 6). A first section (4) is hingedly connected to the base (1) and may controllably rotate within a semi-spherical trajectory. A second section (5) is L-shaped, its horizontal part (5a) is connected to the first section (4) and is capable of maintaining a horizontal position. A third section (6) is hingedly connected to an end of a vertical area of the second section (5), while ensuring their coaxial fixation. The structure allows to sequentially fold and unfold elements of the manipulator (2) in one half-turn, thereby ensuring accurate capturing or launching of the UAV (9).

## Description

### FIELD OF THE INVENTION

The claimed invention relates to a field of unmanned aviation, in particular, to supplementary equipment of unmanned aerial vehicles (UAVs), and it relates to a system for capturing and launching an unmanned aerial vehicle based on a robotic multi-sectional manipulator.

### PRIOR ART

There are systems for capturing and launching an unmanned aerial vehicle that utilize various structures of manipulators that are intended to interact with unmanned aerial vehicles and differ in configuration, number of degrees of freedom and type of a gripping device. Known robotic systems that perform only the function of launching drones from a fixed platform or, conversely, are specialized structures intended for their capture in the air or upon landing are known.

Typically, such manipulators are built on the basis of industrial robots with a multi-link kinematic scheme and are equipped with mechanical, vacuum or magnetic grippers. They ensure high positioning accuracy and possibility of process automation. At the same time, the known structures have significant limitations: when performing only a single function (capturing or launching), they are not versatile, the complex system of hinges and drives complicates maintenance, considerable dimensions and mass of such devices complicate their use in mobile conditions. Thus, in this field of art, there is a need to develop a system with an optimized manipulator structure that could combine a capability of both safe launching and reliable capturing of a UAV, while reducing the number of mechanical units and simplifying the construction to increase reliability and convenience of operation.

Patent US7410125B2 dated August 12, 2008, discloses a multi-sectional manipulator that can be implemented in a system for capturing and launching a UAV. Said manipulator comprises a base, the multi-sectional manipulator that has several sections, an axis of each of the sections is perpendicular to the base, an end of the last section is equipped with a means for capturing and launching a UAV. Said means contains a platform for placing the UAV, a capturing cable system with a motor, a deformation sensor and resistance controllers, a sensor for UAV gripping and tracking with GPS, television and infrared cameras, a locking mechanism for fixing the UAV between a gripping state and a launch state. Disadvantages of this solution include structural complexity, increased weight and volume of the platform, increased wear of mechanical parts that interact with the cable, thereby requiring regular maintenance and inspections of the cable and loaded parts.

Patent CN110239686B dated January 15, 2021, discloses a multi-sectional manipulator that can be implemented in a system for capturing and launching a UAV. The manipulator contains a base, the multi-sectional manipulator that has several sections, an axis of each of the sections is perpendicular to the base, an end of the last section comprises a means for gripping and launching a UAV that comprises a binocular camera and is covered with an anti-slip material, and also provides a presence of a force sensor. A disadvantage of this solution is a risk of damaging the drone, even with the force sensor, a clamping drive can incorrectly secure the UAV, and with incorrect orientation of a gripping device relative to the UAV, it can damage it and the UAV may not land.

Patent US10759052B2 dated September 1, 2020, discloses a system for capturing and launching a UAV using a multi-sectional manipulator. Said manipulator comprises a base, a movable substrate, the multi-sectional manipulator, an end of the last section is equipped with a means for gripping and launching a UAV, it also comprises a control unit for controlling a position of the base and the manipulator, the control unit is configured to collect data about the UAV motion, to build a trajectory of motion for the gripping means from point to point. The UAV must have a metal locking plate for its gripping. Disadvantages of this solution include a complicated structure due to the movable substrate, difficulty of precise aiming, magnetic retention may be unstable, low universality, they are suitable only for UAVs that provide a metal locking plate, due to the large number of mechanical structures, it requires more frequent inspections and maintenance.

Thus, there is a need to improve the system for capturing and launching UAVs, in particular, to improve characteristics of the manipulator for interaction with unmanned aerial vehicles, which would combine the versatility of both launching and gripping of the UAV, ensure structural portability, reliable operation in dynamic conditions, ease of maintenance and increased operational efficiency.

### SUMMARY OF THE INVENTION

The objective underlying the claimed invention is to provide an automated system for capturing and launching a UAV that could be simple in operation, take into account the drawbacks of the prior art and provide reliable and controlled capturing and launching of the UAV in various spatial positions with minimization of the risk of its damage, while being compact, universal in performing both launch and capture of the UAV, while at the same time being suitable for use in various dynamic conditions. The structural improvements of the elements of the system are aimed at achievement of the technical effect that lies in increasing the efficiency of capturing and launching the UAV under dynamic conditions, reducing the risk of UAV damage during capturing or launching, expanding the functional capabilities of the system through a multi-sectional structure with an L-shaped second section, and ensuring the versatility of the system, i.e., its suitability for both ground-based and mobile (for example, shipborne) platforms.

This objective is achieved by providing a system for capturing and launching an unmanned aerial vehicle (UAV), the system comprises a base, a multi-sectional manipulator secured to the base, an end of a last section of the manipulator is equipped with a means for gripping and launching the UAV, as well as a control unit for controlling a position of the base and sections of the manipulator, the control unit is configured to communicate with the UAV for exchanging data followed by determining coordinates of a meeting point of the gripping means with a corresponding element of the UAV, synchronizing actions of the manipulator and the UAV, controlling a position of the UAV at a moment of launching and initiating its launching. This structure of the control unit ensures operation of the system, in particular, maintaining a twoway communication with the unmanned aerial vehicle, calculation of spatial coordinates for mating the position of the gripping means with elements of the UAV, coordination of motion of the sections of the manipulator with a flight trajectory of the vehicle, control of its orientation at the moment of launching and forming a command to start launching, which, in combination, ensures reliability and accuracy of interaction between the system and the UAV.

According to the invention, the manipulator has at least three sections, a first section is hingedly connected to the base so as to ensure controlled rotation of the first section around its own axis and within a semi-spherical trajectory. This structural design ensures expanding a range of spatial movements of the manipulator, since said first section provides movement freedom of the manipulator both in vertical and horizontal planes, while due to the semi-spherical range, a space above the base is covered, thereby increasing flexibility of the system. The first section creates a basic orientation, and then the next sections perform accurate positioning that allows to capture the vehicle that approaches from different directions and at different angles.

A second section is L-shaped, and its horizontal area is hingedly connected to an end of the first section so as to ensure controlled rotation around the axis of the horizontal area and relative to the first section within the trajectory, thereby ensuring maintaining of the horizontal spatial position. Due to the L-shape, the gripping means may cover positions that are not accessible by a straight section. Moreover, a load that acts on hinges is decreased, since the L-shape distributes forces, thereby increasing structural reliability. This structure of the second section provides an additional degree of freedom, rotation around the axis of the horizontal area enables the manipulator to change its position in the vertical plane relative to the first section, as well as to compensate for a change of the trajectory or angle of the UA V approach.

A third section is hingedly connected to an end of a vertical area of the second section, while providing their coaxial fixation, controlled rotation around the axis of the hinged connection from the moment of gripping the UAV, and braking when rotating around the axis of the hinged connection through an angle of at least 180 degrees. The structure of the third section in said way allows, at UAV take-off, to ensure an optimal angle and direction for the safe departure of the vehicle, while at the moment of contact with the UAV during capturing, to absorb excessive kinetic energy due to controlled rotation and braking. When the third section is braked after rotation (up to ≥180 degrees), the coaxiality with the vertical area of the second section ensures smooth and uniform braking without deformations. Moreover, the coaxial fixation allows to rotate the third section around the axis of the vertical area of the second section without any lateral displacement of the gripping means, this is important so that the meeting point with the UAV always remains predictable.

Length of the third section is at least identical to length of a vertical area of the second section, and a start of rotation of the second section around the axis of its own horizontal area is possible when rotation starts around the axis of the hinged connection of the third section. Due to the identical or greater length of the third section compared to the vertical area of the second section, an extended working area for the end of the manipulator and stable positioning of the gripping means are ensured, while the synchronous start of rotation of the second section relative to the movement of the third section ensures to coordinate the sections' movements, increases the positioning accuracy and smoothness of the manipulator's trajectory, thereby ensuring effective and safe capturing and launching of the UAV.

According to one of possible exemplary embodiments, the base is made gyrostabilized, thereby allowing to reduce a positioning error of the manipulator's end, this is especially critical for UAV gripping/launching, and gyrostabilization of the manipulator also ensures to control the precise coincidence of the coordinates of the meeting point with the UAV, thereby reducing the risk of UAV fall or collision with the manipulator.

According to one of possible exemplary embodiments, the controlled movement of the sections of the manipulator is ensured by a hinged connection equipped with servo drives with brakes, and they further comprise position and motion sensors. Owing to the servo drives and sensors, the system accurately positions the gripper or launching mechanisms relative to the UAV, thereby ensuring precise gripping or correct launching of the UAV, as well as coordinates the movement of all sections of the manipulator so that the end of the manipulator reaches the required point at the required moment to meet the UAV. The brakes allow to stop the section precisely in position, to hold it under load (for example, during gripping or when rotating by 180°), thereby reducing oscillations and the risk of the UAV fall. Positioning and motion sensors ensure real tracking of the manipulator's state and, thus, the system tracks where each section is located and corrects movements in real time, for example, during unstable movement of the UAV.

According to another one of possible exemplary embodiments, the means for gripping and launching the UAV is a fixing element that is configured to hold the UAV during its capturing or launching, which provides stability and controlled contact while the system synchronizes movements and launches the drone. The fixation allows to initiate the UAV's start in a defined position and direction, which is important for stable flight, and in the case of inaccurate positioning or manipulator oscillations, the fixing element softens the contact and holds the drone.

According to one of possible exemplary embodiments, the means for gripping and launching the UAV is made in the form of a V-shaped element or an electromagnetic area or a pneumatic element or a net or a loop, i.e., it is easily implemented by known means and in all cases provides reliable actuation, since it is sufficient to simply integrate it with the control system for precise positioning, and it allows the system to easily operate with drones of various shapes and sizes.

### BRIEF DESCRIPTION OF THE DRAWINGS

In order to provide more complete understanding of the claimed invention and advantages thereof, the following description provides an explanation of a possible implementation thereof with reference to figures of the appended drawings, wherein identical designations denote identical parts, and which illustrate the following:
- Fig. 1 illustrates a general view of the system at the moment of capturing or launching the UAV according to the claimed invention;
- Fig. 2 illustrates a general view of the system at the end of capturing or before start of launching the UAV according to the claimed invention;
- Fig. 3 illustrates a schematic view of a possible structural embodiment of the system for capturing or launching the UAV in a folded state;
- Fig. 4 illustrates a schematic view of a possible structural embodiment of the system for capturing or launching the UAV, where the UAV gripping and launching means is made as a V-shaped element;
- Fig. 5 illustrates a schematic view of a possible structural embodiment of the system for capturing or launching the UAV, where the manipulator consists of four sections;
- Fig. 6 illustrates a schematic diagram that demonstrates an interconnection and sequence of actions in controlling the system for automated capturing and launching the UAV.

The illustrative materials that explain the claimed invention and the disclosed specific exemplary embodiments do not limit the claimed scope of rights in any way, rather they only explain the essence of the invention.

### IMPLEMENTATION OF THE INVENTION

A system for capturing and launching a UAV comprises a base 1, a multi-sectional manipulator 2 secured to the base, the manipulator consists of three sections that are interconnected by means of hinged connections 3. The base 1 may be made gyrostabilized.

A first section 4 is connected to the base 1 so as to be controllably rotatable around its own axis and within a semi-spherical trajectory that is ensured by the hinged connection 3. The hinged connection between the manipulator 2 and the base 1 may be made as a spherical or versatile hinge, while ensuring rotation of the first section within the semi-sphere at 360° and around its own axis, and motorized with electronic sensors 14 and drives for active positioning.

A second section 5 is L-shaped, and its horizontal area 5a is hingedly connected to an end of the first section 4 so as to ensure controlled rotation, thereby ensuring maintaining of the horizontal spatial position. The hinged connection between the second section 5 and the first section 4 may be made as a spherical hinge at the end of a rod with rotation of almost 360° over the sphere and around its axis, with integrated active gyrostabilization sensors, thereby ensuring that the position of the hinge remains minimally movable in the inertial system and that the horizontal area 5a is oriented in a stable position.

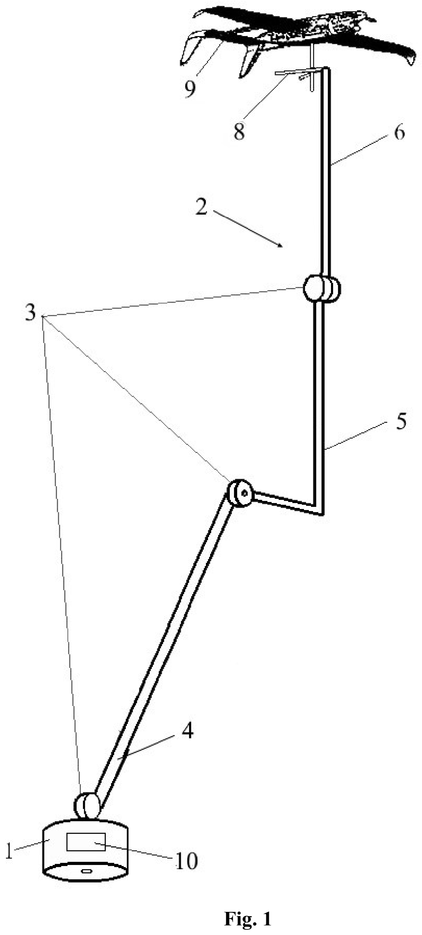

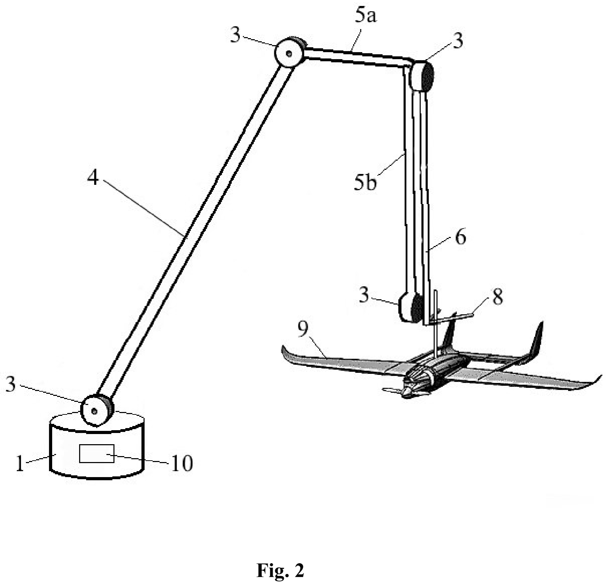

The third section 6 is hingedly connected to the end of the vertical area 5b of the second section 5, while providing their coaxial fixation, controlled rotation around the axis of the hinged connection from the moment of gripping the UAV 9, and braking when rotating around the axis of the hinged connection through an angle of at least 180 degrees. The hinged connection between the third section 6 and the vertical area 5b of the second section 5 may be made as a rotary motorized hinge equipped with servo drives 12 with brakes 13, which allows these sections to tilt 360° relative to each other in the vertical plane. This ensures maximum mast-like initial position of the end of the manipulator 2 (Fig. 1) and sequential folding of the section until fixation of the position of the end of the manipulator 2 at the level of the axis of rotation of the horizontal area 5a (Fig. 2).

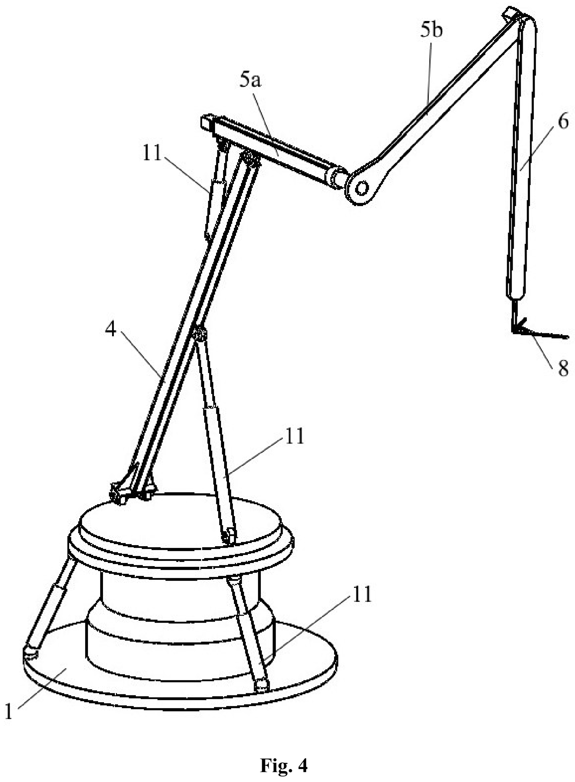

The end of the third section 6 is equipped with a means 8 for gripping and launching the UAV, the means is configured to hold the UAV 9 during its capturing or launching. As the means 8 for gripping and launching the UAV, a fixing element known from the prior art may be used, this element is configured to hold the UAV 9 during its capturing or launching. Fig. 4 illustrates one of embodiments of the means 8 for gripping and launching the UAV, namely in the form of a V-shaped element. In another embodiment, the means 8 for gripping and launching the UAV may be made in the form of an electromagnetic section.

Length of the third section 6 is identical to length of the vertical area 5b of the second section 5, and the start of rotation of the second section 5 around the axis of its own horizontal area 5a is possible when rotation starts around the axis of the hinged connection of the third section 6.

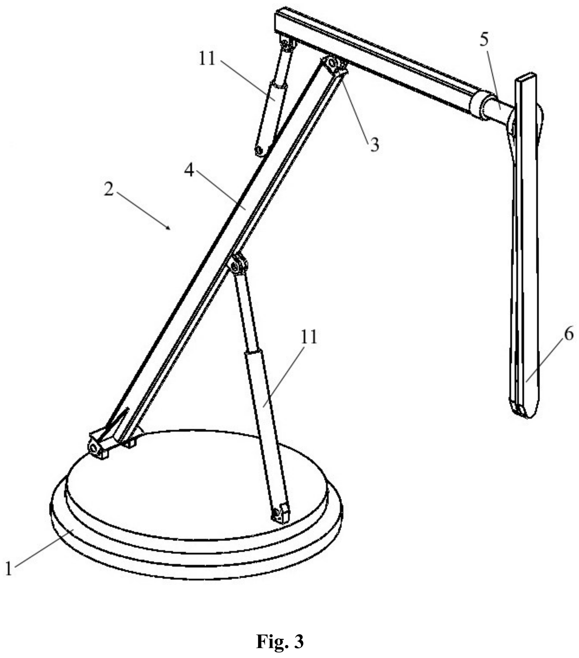

The control unit 10 ensures maintaining communication with the UAV 9 for data exchange, determining coordinates of the meeting point of the means 8 for gripping and launching the UAV with the vehicle, synchronizing actions of the manipulator 2 and the UAV 9, controlling the position of the UAV 9 at the moment of launching and initiating its launching. Fig. 3 illustrates a possible structural embodiment of the system in the folded state. In this position, the manipulator 2 has compact dimensions, thereby facilitating transportation and storage of the system. At the same time, the position of the base 1, the first section 4, and the horizontal area 6a of the second section 6 can be further stabilized by means of supports 11, which may be spring-loaded or made in the form of pneumatic or hydraulic cylinders, providing vibration damping and compensation of external loads during system operation, and serving as actuating elements of the gyrostabilization of the base 1, into which gyroscopes and accelerometers may be integrated, similar to solutions known from the prior art.

Fig. 4 illustrates the system in a dynamic operating mode, when the base 1 ensures active gyro stabilization and serves as a reference point for a complex spatial movement of the sections of the manipulator 2. This Fig. 4 illustrates a possible variant of positioning the manipulator sections during the sequence of folding/unfolding and the beginning of rotation of its sections. The manipulator 2 is configured to sequentially fold or unfold the third section 6 and the vertical area 5b of the second section 5 during one half-turn of the horizontal area 5a around its axis. In the initial state, the manipulator 2 is in the folded position (see Fig. 3), thereby ensuring compactness of the structure and transportation convenience.

Before the start of the UAV 9 capturing or launching process, the control unit 10 switches the system to the operating mode. Based on the data obtained from navigation sensors and the UAV 9 itself, the control unit 10 determines the movement trajectory and coordinates of the meeting point of the gripping and launching means 8 with the corresponding element of the UAV 9. According to these calculations, the manipulator 2 is deployed: the third section 6 and the vertical area 5b of the second section 5 are sequentially unfolded during one half-turn of the horizontal area 5a of the second section (see Fig. 4). This allows the gripping and launching means 8 to be quickly and precisely brought into the given spatial position.

At the moment of approach of the UAV 9, the system switches to a trajectory matching mode. Owing to the gyrostabilized base 1, external vibrations and tilts are compensated, thereby ensuring stability of the position of the manipulator 2 in space. The control unit 10 synchronizes the movement of the manipulator 2 with the trajectory of the UAV 9, after which the gripping and launching means 8 connects to the UAV 9 and secures it (see Fig. 1-2). In the capturing mode, the system holds the UAV 9 in a stable position, thereby preventing its uncontrolled oscillations. In the launching mode, after synchronization of the vehicle's position and confirmation of readiness from the UAV 9, the control unit 10 initiates its start. At the same time, the gripping and launching means 8 releases the vehicle at a defined point in space, thereby ensuring a safe and controlled entry of the UAV onto its flight trajectory.

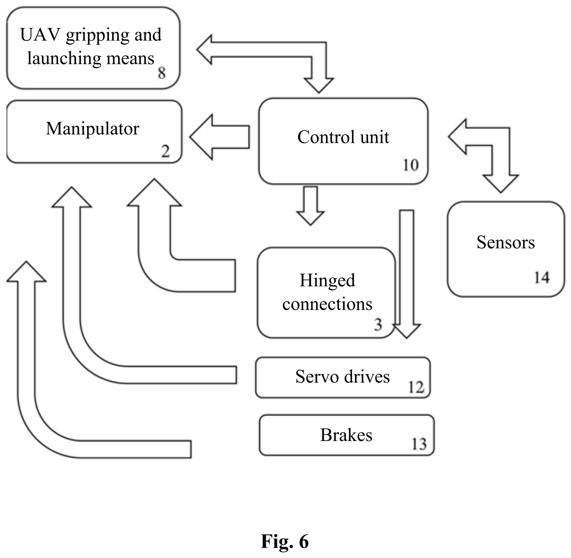

Sequence and interrelation of all actions performed by the system during capturing and launching are shown in the form of a schematic diagram in Fig. 6, which generally illustrates the schematic diagram that demonstrates interrelation and sequence of actions during control of the system. At the initial stage, the control unit 10 receives data from the UAV 9, activates the stabilization system of the base 1, and the manipulator 2 is deployed, during which the servo drives 12 in the hinged connections 3 move the sections 4-6, while the brakes 13 hold the passed positions, thereby preventing uncontrolled oscillations.

When the gripping and launching means 8 approaches and contacts the UAV 9, coordinates of the meeting point are determined, the movement of the manipulator 2 is corrected, and the gripping and launching means 8 connects to the UAV 9. The brakes 13 lock the hinged connections 3, while holding the manipulator 2 in the required position. The gripping and launching means 8 holds the UAV 9. For launching, the control unit 10 checks the orientation and parameters of the UAV 9, initiates the launch and activates the release of the means 8. Thus, the control unit 10 maintains communication with the UAV 9 for data exchange, determines the coordinates of the meeting point of the gripping and launching means 8 with the vehicle, synchronizes the actions of the manipulator 2 and the UAV 9, controls the position of the UAV at the moment of launch, and initiates the launch process.

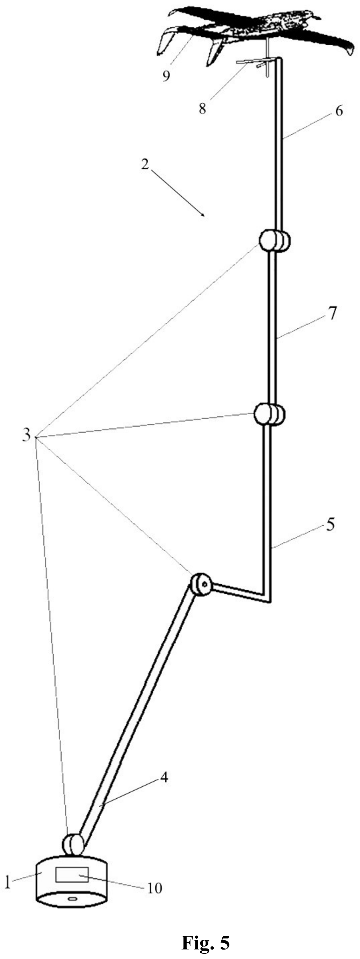

In another exemplary embodiment, as illustrated in Fig. 5, the multisection manipulator 2 consists of four sections connected to each other by means of hinged connections 3. The intermediate section 7 is hingedly connected to the second section 5 and the third section 6. The hinged connection between the vertical area 5b of the second section 5 and the third section 6 may be made as a rotary, motorized hinge equipped with servo drives 12 with brakes 13.

Thus, the claimed system is an automated system for capturing and launching UAVs that is simple in operation and provides increased efficiency of UAV capturing and launching under dynamic conditions, reduces the risk of UAV damage during capturing or launching, ensures versatility, i.e., its suitability for both ground-based and mobile platforms, and has expanded functional capabilities due to the multi-sectional structure with the L-shaped second section.

### Main designations:

- 1: the base,
- 2: the manipulator,
- 3: the hinged connections,
- 4: the first section,
- 5: the second section,
- 5a: the vertical area of the second section,
- 5b: the horizontal area of the second section,
- 6: the third section,
- 7: the fourth section,
- 8: the UAV gripping and launching means,
- 9: the UAV,
- 10: the control unit,
- 11: supports,
- 12: the servo drives,
- 13: the brakes,
- 14: the sensors.

## Claims

1. A system for automated capturing and launching an unmanned aerial vehicle, UAV (9), the system comprises a base (1), a multi-sectional manipulator (2) secured to the base (1), an end of a last section of the manipulator (2) is equipped with a means for gripping and launching (8) the UAV (9), as well as a control unit (10) for controlling a position of the base (1) and sections of the manipulator (2), the control unit (10) is configured to communicate with the UAV (9) for exchanging data followed by determining coordinates of a meeting point of the means for gripping and launching (8) with a corresponding element of the UAV (9), synchronizing actions of the manipulator (2) and the UAV (9), controlling a position of the UAV (9) at a moment of launching and initiating its launching, **wherein** the manipulator (2) has at least three sections, a first section (4) is connected to the base (1) so as to ensure controlled rotation of the first section (4) around its own axis and within a semi-spherical trajectory, a second section (5) is L-shaped, and its horizontal area (5a) is hingedly connected to an end of the first section (4) so as to ensure controlled rotation around the axis of the horizontal area (5a) and relative to the first section (4) within the trajectory, thereby ensuring maintaining of a horizontal spatial position, a third section (6) is hingedly connected to an end of a vertical area (5b) of the second section (5), while providing their coaxial fixation, controlled rotation around the axis of the hinged connection (3) from the moment of gripping the UAV (9), and braking when rotating around the axis of the hinge connection (3) through an angle of at least 180 degrees, and a length of the third section (6) is at least identical to length of a vertical area (5b) of the second section (5), and a start of rotation of the second section (5) around the axis of its own horizontal area (5a) is possible when rotation starts around the axis of the hinged connection (3) of the third section (6).

2. The system according to claim 1, **wherein** the base (1) is gyrostabilized.

3. The system according to claim 1 or claim 2, **wherein** the controlled movement of the sections of the manipulator (2) is ensured by a hinge connection (3) equipped with servo drives (12) with brakes (13), and they further comprise position and motion sensors (14).

4. The system according to claims 1-3, **wherein** the means for gripping and launching (8) the UAV (9) is a fixing element that is configured to hold the UA V (9) during its capturing or launching.

5. The system according to claims 1-3, **wherein** the means for gripping and launching (8) the UAV (9) is made in a form of a V-shaped element.

6. The system according to claims 1-3, **wherein** the means for gripping and launching (8) the UAV (9) is made in a form of an electromagnetic area or a pneumatic element or a net or a loop.
